# EUROPÄISCHE PATENTSCHRIFT

(11) **EP 1 420 055 B1**
(45) Veröffentlichungstag und Bekanntmachung des Hinweises auf die Patenterteilung: **27.07.2005**
(21) Anmeldenummer: 03024924.7
(22) Anmeldetag: 29.10.2003
(51) Int. Cl.: C09J 133/08, C08F 265/06, C08F 291/00, C09D 151/00, C09J 151/00, D21H 19/58, B32B 27/08, B32B 27/30

(54) **UV-vernetzbare Kaschierklebstoffe**
UV-crosslinkable laminating adhesives
Adhesifs à contrecoller réticulables aux UV

(30) Priorität: 14.11.2002 DE 10253332
(43) Veröffentlichungstag der Anmeldung: 19.05.2004
(73) Patentinhaber: BASF AKTIENGESELLSCHAFT, 67056 Ludwigshafen (DE)
(72) Erfinder: Jung, Martin, Dr., 68165 Mannheim (DE); Staller, Christelle, Dr., 67470 Seltz (FR); Fricke, Hans-Joachim, 67246 Dirmstein (DE); Centner, Alexander, Dr., 67127 Rödersheim-Gronau (DE)

(56) Entgegenhaltungen:
- EP-A- 0 900 651
- WO-A-98/10001
- DE-A- 4 219 384
- DE-A- 19 908 183

## Beschreibung

Die Erfindung betrifft eine Verwendung von Zusammensetzungen, enthaltend ein Copolymerisat, erhältlich durch mehrstufige radikalische Polymerisation, wobei zunächst eine wässrige Polymerdispersion hergestellt wird (kurz als 1 Stufe bezeichnet) und in mindestens einer weiteren Stufe Monomere in Gegenwart der erhaltenen Polymerdispersion polymerisiert werden (alle weiteren Stufen kurz als 2. Stufe bezeichnet)
als Kaschierklebstoff.

Weiterhin betrifft die Erfindung die Verwendung der Zusammensetzung als Klebstoff für die Glanzfolienkaschierung.

Für Kaschierungen werden im Allgemeinen Klebstoffe auf Basis vernetzbarer Polymerisate verwendet.

Bei der Glanzfolienkaschierung wird im allgemeinen zunächst eine transparente Polymerfolie, in der Regel orientiertes Polypropylen OPP oder auch Polyacetat mit dem flüssigen Klebstoff beschichtet. Dann wird der Klebstoff getrocknet und anschließend die beschichtete Folie unter Druck und Wärme auf den Bedruckstoff, in der Regel ein bedruckter Karton oder Papier kaschiert. Das so hergestellte Laminat wird in der Weiterverarbeitung häufig genutet oder geprägt. Um nut- bzw. prägefest zu sein, muß die Klebstoffschicht diesen Verformungen des Laminats standhalten, in der Nut bzw. in den Prägstellen, darf sich die Glanzfolie nicht von dem Bedruckstoff lösen. Um dies zu gewährleisten, sind die Klebstoffsysteme in der Regel chemisch vernetzt.

Chemisch vernetzende Polymerdispersionen für die Glanzfolienkaschierung sind z.B. aus EP-A-148386 oder EP-A- 644902 bekannt.

Bekannt sind auch durch mehrstufige Emulsionspolymerisation erhältliche Polymere.

In WO 98/10001 wird ein Verfahren beschrieben, welches als Quellungspolymerisation bezeichnet werden kann. Dabei werden Monomere zunächst in üblicher Weise unter Verwendung von Radikalstartern durch Emulsionspolymerisation hergestellt und danach weitere Monomere ohne Verwendung von zusätzlichen Initiator zugesetzt.

Aufgabe der vorliegenden waren Klebstoffe, welche sich gut für die Glanzfolienkaschierung eignen und die Anforderungen insbesondere an die Haftung, Nut- und Prägefestigkeit in hohem Maße erfüllen. Die Anforderungen sollen möglichst auch mit nur geringen Vernetzermengen erfüllt werden.

Demgemäß wurde die eingangsdefinierte Verwendung gefunden.

Beim erfindungsgemäß verwendeten Copolymerisat handelt es sich insbesondere um ein Copolymerisat, welches durch radikalische Polymerisation insbesondere durch Emulsionspolymerisation erhältlich ist.

Vorzugsweise besteht das Copolymerisat zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus
C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Beim Copolymerisat handelt es sich vorzugsweise um ein chemisch vernetzbares Copolymerisat.

Die Vernetzung kann z.B. durch photochemische Aktivierung erfolgen. Dazu kann das Copolymerisat Fotoinitiatorgruppen, z.B. durch Copolymerisation mit entsprechenden Monomeren mit photoaktivierbaren Gruppen enthalten. Fotoinitiatoren können auch separat zugesetzt werden.

Vorzugsweise enthält das Copolymerisat funktionelle Gruppen, welche mit einem zugesetzten Vernetzer eine chemische Vernetzungsreaktion eingehen können.

Der Gehalt derartig funktioneller Gruppen oder auch von fotoaktivierbaren Gruppen oder auch von Fotoinitiatoren beträgt insbesondere 0,0001 Mol bis 1 Mol besonders bevorzugt 0,0002 bis 0,1 Mol und ganz besonders bevorzugt 0,0006 bis 0,03 Mol auf 100 g Copolymerisat.

Bei der chemischen Vernetzungsreaktion handelt es sich insbesondere um eine Reaktion, die erst bei oder nach der späteren Verfilmung des Copolymerisats, d.h. während oder nach der Verflüchtigung des Dispersionswassers und nicht gleich nach Zugabe eines Vernetzers zur wäßrigen Dispersion des Copolymerisats eintritt oder ausgelöst wird (z.B. mit energiereichem Licht).

Vorzugsweise handelt es sich bei den funktionellen Gruppen um Keto- oder Aldehydgruppen. Die Keto- oder Aldehydgruppen sind vorzugsweise durch Copolymerisation von copolymerisierbaren, ethylenisch ungesättigten Verbindungen mit Keto- oder Aldehydgruppen an das Polymer gebunden. Geeignete derartige Verbindungen sind Acrolein, Methacrolein, Vinylalkylketone mit 1 bis 20, vorzugsweise 1 bis 10 Kohlenstoffatome im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfaßt, z.B. (Meth)acryloxyalkylpropanale, wie sie in der DE-A-2722097 beschrieben sind. Des weiteren eignen sich auch N-Oxoalkyl(meth)acrylamide wie sie z.B. aus der US-A-4226007, der DE-A-2061213 oder DE-A-2207209 bekannt sind.

Besonders bevorzugt sind Acetoacetyl(meth)acrylat, Acetoacetoxyethyl(meth)acrylat und insbesondere Diacetonacrylamid.

Neben den Hauptmonomeren und Monomeren, die mit einem Vernetzer reagieren kann das Copolymerisat weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fummarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykol-mono- (meth-)acrylat, Glycidylacrylat, Glycidylmethacrylat, Amino- (meth-)acrylate wie 2-Aminoethyl- (meth-)acrylat genannt.

Monomere, die außer der Doppelbindung noch weitere funktionelle Gruppen tragen, z.B. Isocyanat-, Amino-, Hydroxy-, Amid- oder Glycidyl-, können z.B. die Haftung auf Substraten verbessern.

Die Glasübergangstemperatur des Copolymerisats liegt bevorzugt unter 60°C, insbesondere beträgt sie -50 bis +60°C, besonders bevorzugt -30 bis +40°C und ganz besonders bevorzugt -30 bis +20°C.

Die Glasüberganstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Die Herstellung des Copolymerisats erfolgt vorzugsweise durch Emulsionspolymerisation, es handelt sich daher um ein Emulsionspolymerisat.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 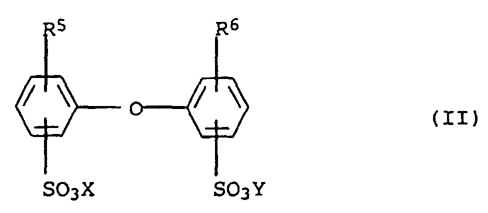 worin R⁵ und R⁶ Wasserstoff oder C₄- bis C₁₄-Alkyl bedeuten und nicht gleichzeitig Wasserstoff sind, und C und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Handelsnamen von Emulgatoren sind z.B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sich insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilon oder tert.-Dodecylmercaptan. Der Anteil dieser Regler kann insbesondere 0,05 bis 0,8 Gew.-Teile, bevorzugt 0,1 bis 0,5 Gew.-Teile bezogen auf 100 Gew.-Teile der zu polymerisierenden Monomeren betragen.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Zur Entfernung der Restmonomeren wird gegebenenfalls nach dem Ende der Emulsionspolymerisation und aller Stufen der Emulsionpolymerisation, d.h. nach einem Umsatz aller Monomeren von mindestens 95 %, insbesondere 98 % Initiator zugesetzt, um restliche Monomere anzubinden.

Die vorstehenden Angaben gelten für das Copolymerisat insgesamt.

Das erfindungsgemäß verwendete Copolymerisat ist durch mehrstufige Polymerisationen erhältlich, es gelten daher zusätzlich die nachstehenden Ausführungen.

Es kann zunächst eine wäßrige Polymerdispersion in üblicher Weise durch Emulsionspolymerisation hergestellt werden (kurz als 1 Stufe bezeichnet).

Bevor mit der Polymerisation weiterer Stufen (zusammenfassend 2 Stufe genannt) begonnen wird, sind vorzugsweise alle in der 1 Stufe zu polymerisierenden Monomeren der wäßrigen Dispersion zugegeben worden und zu mindestens 80 Gew.-% insbesondere zu mindestens 90 Gew.-% ganz besonders bevorzugt zu mindestens, 95 Gew.-% polymerisiert.

Bevor Monomere der 2 Stufe zugegeben werden, wird die in der 1 Stufe erhaltene Polymerdispersion vorzugsweise mindestens 5 Minuten, besonders bevorzugt mindestens 10 Minuten bei erhöhter Temperatur, vorzugsweise einer Temperatur zwischen 60 und 100°C gehalten.

Zur Polymerisation der Monomeren der 1 Stufe wird vorzugsweise ein Initiator in Mengen um 0,05 bis 5 Gew.-Teilen besonders bevorzugt von 0,1 bis 2, ganz besonders bevorzugt 0,1 bis 1 Gew.-Teile, bezogen auf 100 Gew.-Teilen bezogen auf 100 Gew.-Teile der in der 1 Stufe zu polymerisierenden Monomeren zugesetzt. Der Initiator kann vorgelegt oder während der Polymerisation der 1 Stufe zugesetzt werden.

Bei der Polymerisation der Monomeren der 2 Stufe wird im Vergleich zur 1 Stufe weniger Initiator, bezogen auf die Monomeren der 2 Stufe eingesetzt.

Die relative Initiatormenge, d.h. die Initiatormenge in Gew.-Teilen bezogen auf 100 Gew.-Teile Monomerengemisch der 1 Stufe bzw. der 2 Stufe, beträgt in der 2 Stufe weniger als die Hälfte, besonders bevorzugt weniger als ein Viertel der 1 Stufe.

Ganz besonders bevorzugt wird in der 2 Stufe überhaupt kein Initiator zugesetzt.

Die Monomerengemische der 1 und 2 Stufe unterscheiden sich vorzugsweise in ihrer Glasübergangstemperatur (T_{g}).

Unter der Glasübergangstemperatur wird hier die nach der Fox-Gleichung berechnet T_{g} der Monomerengemische verstanden, (T.G. Fox Bull. Am Phys. Soc. (Ser II) 1, 123 (1956).

Die Berechnung erfolgt dabei aus den Tg-Werten der Homopolymere der Monomeren, wie sie im Polymer Handbook, J. Brandrup, E. Immergut, John Wiley & Sons, New York aufgeführt sind.

Die Tg der Monomerengemische der beiden Stufen unterscheidet sich vorzugsweise um mindestens 10°C, besonders bevorzugt um mindestens 20°C, ganz besonders bevorzugt um mindestens 30°C, insbesonders um mindestens 50°C.

Vorzugsweise hat das Monomerengemisch der 2 Stufe die höhere Tg.

Vorzugsweise besteht das Monomerengemisch der 2 Stufe zu mindestens 50 Gew.-% besonders bevorzugt zu mindestens 75 Gew.-% und ganz besonders bevorzugt 2 zu 100 Gew.-% aus Methylmethacrylat.

Der Anteil des Monomerengemisches der 1 Stufe am gesamten Copolymerisat beträgt vorzugsweise
70 bis 99,5 Gew.-%, insbesonders 80 bis 98 Gew.-% und besonders bevorzugt 90 bis 98 Gew.-%.

Entsprechend beträgt der Anteil des Monomerengemisches der 2 Stufe 30 bis 0,5 Gew.-%, 20 bis 2 Gew.-% und 10 bis 2 Gew.-%.

In einer ganz besonderen Ausführungsform besteht das Copolymerisat zu 93 bis 97 Gew.-% aus dem Monomerengemisch der 1 Stufe und zu 7 bis 3 Gew.-% aus dem Monomerengemisch der 2 Stufe.

Die Zusammensetzung wird erfindungsgemäß als Kaschierklebstoff d.h. zum Verkleben von großflächigen Substraten verwendet.

Die Zusammensetzung kann dazu ausschließlich aus der wäßrigen Dispersion des Copolymerisats bestehen. Sie kann weitere Zusatzstoffe, z.B. Netzmittel, Verdicker, Schutzkolloide, Lichtschutz-Stabilisatoren, Biozide, Tackifier, Weichmacher enthalten.

Vorzugsweise enthält sie zumindest einen Vernetzer für die vernetzbaren Gruppen des Copolymerisats, insbesondere den Keto- oder Aldehydgruppen.

Bei den Vernetzer handelt es sich vorzugsweise um eine Verbindung mit mindestens 2 funktionellen Gruppen, insbesondere 2 bis 5 funktionelle Gruppen, besonders bevorzugt 2 oder 3 funktionellen Gruppen, ganz besonders bevorzugt 2 funktionellen Gruppen, die mit den funktionellen Gruppen des Copolymerisats, insbesondere den Keto- oder Aldehydgruppen eine Vernetzungsreaktion eingehen.

In Betracht kommen z.B. Hydrazid-, Hydroxylamin- oder Oximether- oder Aminogruppen als funktionelle Gruppen für die Vernetzung der Keto- oder Aldehydgruppen.

Geeignete Verbindungen mit Hydrazidgruppen sind z.B. Polycarbonsäurehydrazide mit einem Molgewicht von bis zu 500 g/mol.

Besonders bevorzugte Hydrazidverbindungen sind Dicarbonsäuredihydrazide mit bevorzugt 2 bis 10 C-Atomen.

Genannt seien z.B. Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazinsäuredihydrazid und Isophthalsäuredihydrazid.

Geeignete Verbindungen mit Hydroxylamin- oder Oximethergruppen sind z.B. in WO 93/25588 genannt.

Vorzugsweise handelt es sich bei den Verbindungen um Hydroxylaminderivate der allgemeinen Formel 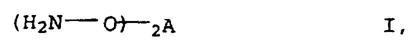 worin A für einen gesättigten oder ungesättigten aliphatischen, linearen oder verzweigten Kohlenwasserstoffrest aus 2 bis 12 Kohlenstoffatomen, welcher durch 1 bis 3 nicht benachbarte Sauerstoffatome unterbrochen sein kann, und n für 2, 3 oder 4 steht,
oder einen Oximether der Formel 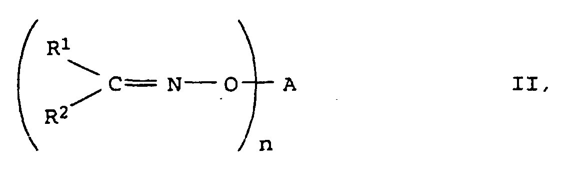 worin A und n die oben genannte Bedeutung haben und R¹ und R² unabhängig voneinander für einen C₁-C₁₀-Alkyl, einen C₁-C₁₀-Alkoxy-, einen C₅-C₁₀-Cycloalkyl- oder einen C₅-C₁₀-Arylrest, welche auch 1 bis 3 nicht benachbarte Stickstoff-, Sauerstoff- oder Schwefelatome in der Kohlenstoffkette oder im Kohlenstoffring enthalten und durch 1 bis 3 C₁-C₄-Alkyl- oder -Alkoxygruppen substituiert sein können, stehen, R¹ oder R² für ein Wasserstoffatom stehen können,
oder R¹ oder R² gemeinsam eine Brücke aus 2 bis 14 Kohlenstoffatomen bilden, wobei ein Teil der Kohlenstoffatome auch Bestandteil eines aromatischen Ringsystems sein kann.

Bei der Variablen A in Formeln I und II handelt es sich bevorzugt um eine Kohlenwasserstoffkette aus 2 bis 8 Kohlenstoffatomen und n ist vorzugsweise gleich 2.

Die Reste R¹ und R² stehen jeweils bevorzugt für ein Wasserstoffatom, eine C₁- bis C₆-Alkylgruppe oder eine C₁- bis C₆-Alkoxygruppe. Im Falle des Wasserstoffatoms kann nur einer der Reste R¹ oder R² für ein Wasserstoffatom stehen.

Als Verbindungen mit Aminogruppen geeignet sind beispielsweise Ethylendiamin, Propylendiamin, Tetramethylendiamin, Pentamethylendiamin, Hexamethylendiamin, Diethylentriamin, Triethylentetramin, Polyethylenimine, teilhydrolysierte Polyvinylformamide, Ethylenoxid und Propylenoxid Addukte wie die Texaco "Jeffamine", Cyclohexandiamin und Xylylendiamin.

Die Verbindung mit den funktionellen Gruppen kann der Zusammensetzung, bzw. der Dispersion des Copolymerisats zu jedem Zeitpunkt zugesetzt werden. In der wäßrigen Dispersion tritt noch keine Vernetzung mit den Keto- oder Aldehydgruppen ein. Erst bei der Trocknung tritt Vernetzung auf dem beschichteten Substrat ein.

Die Menge der Verbindung mit dem funktionellen Gruppen wird vorzugsweise so bemessen, dass das Molverhältnis der funktionellen Gruppen zu den funktionellen Gruppen, insbesondere Keto- und/oder Aldehydgruppen des Copolymerisats 1:10 bis 10:1, insbesondere 1:5 bis 5:1, besonders bevorzugt 1:2 bis 2:1 und ganz besonders bevorzugt 1:1,3 bis 1,3:1 beträgt.

Insbesondere sind äquimolare Mengen der funktionellen Gruppen der Vernetzer und der funktionellen Gruppen des Copolymerisats, insbesondere der Keto- und/oder Aldehydgruppen bevorzugt.

Als zu verklebende Substrate eignen sich z.B. Polymerfolien, insbesondere aus Polyethylen, orientiertem Polypropylen, Polyamid, Polyethylenterephthalat, Celluloseacetat, Zellglas, mit Metall (z.B. Aluminium beschichtete (bedampfte) Polymerfolie (kurz: metallisierte Folien) oder auch Papier, Karton oder Metallfolien, insbesondere aus Aluminium. Die genannten Folien können auch z.B. mit Druckfarben bedruckt sein.

Der Kaschierklebstoff wird auf zumindest ein großflächiges Substrat vorzugsweise mit einer Schichtdicke von 0,1 bis 20, besonders bevorzugt 2 bis 15 g/m² z.B. durch Rakeln, Streichen etc. aufgetragen.

Vorzugsweise nach Trocknung bzw. Ablüftung des Dispersionswasser (z.B. nach 1 bis 60 Sekunden) kann das beschichtete Substrat dann mit einem zweiten Substrat kaschiert werden, wobei die Temperatur z.B. 20 bis 200, vorzugsweise 20 bis 70°C und der Druck z.B. 1 bis 30, vorzugsweise 3 bis 20 N/m² betragen kann.

Bei Copolymerisaten, welche photochemisch vernetzt werden, wird die Vernetzungsreaktion vor oder nach der Kaschierung insbesondere durch Bestrahlung mit energiereichem Licht ausgelöst.

Vorzugsweise handelt es sich bei dem Klebstoff beschichteten Substrat um eine transparente Polymerfolie.

Das Polymerisat bzw. die Dispersion wird bevorzugt als Klebstoff für die Glanzfolienkaschierung verwendet.

Bei der Glanzfolienkaschierung werden Papier oder Karton mit transparenten Polymerfolien verklebt. Die Papiere oder Kartone können bedruckt sein.

Mit dem erfindungsgemäßen Kaschierklebstoff werden Substratverbunde mit hoher Haftfestigkeit, auch im Bereich von Nuten oder Prägungen und hoher Transparenz und hohem Glanz erhalten. Die hohen Festigkeiten werden bereits mit geringen Mengen an Vernetzer erreicht, bei nicht erfindungsgemäßen Polymerisaten sind deutlich höhere Mengen an Vernetzer erforderlich, um gleiche Eigenschaften zu erreichen.

### Beispiele:

### A) Herstellung

Die Herstellung von den wäßrigen Dispersionen folgte der allgemeinen Vorschrift: Die Vorlage (180 g Wasser und 3,5 g Styrolsaat, 33%ig) wurde auf 90°C Innentemperatur aufgeheizt und 10% Zulauf 2 vorgelegt. Zulauf 2 bestand aus 67 g Natriumperoxodisulfat (2,5%ig). Nach 5 min wurde Zulauf 1, welcher die Monomeren enthält, und Zulauf 2 gestartet. Die Zusammensetzung von Zulauf 1 ist in Tabelle 1 angegeben. Zulauf 1 und 2 wurden in 2h zudosiert und 0,5h nachpolymerisiert.

| Dispersion | Monomerzusammensetzung von Zulauf 1 | | | | 2. Stufe |
|---|---|---|---|---|---|
| Nr. | BA | MMA | AS | DAAM | |
| 1 | 77 | 15 | 2 | 1 | 5 MMA |
| 2 | 77 | 20 | 2 | 1 | - |
| 3 | 76,5 | 15 | 2 | 1,5 | - |
| 4 | 76 | 15 | 2 | 2 | - |
| BA: Butylacrylat | | | | | |
| MMA: Methylmethacrylat | | | | | |
| AS: Acrylsäure | | | | | |
| DAAM: Diacetonacrylamid | | | | | |

Die Menge Initiator (Natriumperoxodisulfat) betrug jeweils 0,3 Gew.-Teile, als Emulgator wurden 0,5 Gew. Teile Dowfax 2A1 und 0,5 Gew.-Teile Disponil FES77, bezogen auf die in der Tabelle angegebenen Gew.-Teile Monomere verwendet.

Für die Dispersion 1, unter Aufrechthaltung der 90°C wurde die Dispersion für 15 Minuten unter Polymerisation selbst überlassen. Die Dispersion des Polymerisats wurde auf einmal mit 5 Gew. Teile bezogen auf die insgesamt polymerisierten Monomeren versetzt. Danach bei 90°C wurde die Dispersion 3 Minuten gerührt.

Allen Dispersionen wurde nach Abkühlen eine wäßrige Lösung von ADDH (ADDH: Adipinsäuredihydrazid Gew.-Teile ADDH, fest, in Tabelle 1 angegeben) zugegeben.

### B) Mechanische Eigenschaften des Polymerfilms

Zur Bestimmung der mechanischen Eigenschaften des Films der wäßrigen Polymerisatdispersion wurde diese auf einen Feststoffgehalt von 25 gew.-% verdünnt. Anschließend wurde eine Probe der so verdünnten wäßrigen Polymerisat-dispersion in einer Form aus Silicon während ein paar Tage bei Raumtemperatur getrocknet.

Die Polymermenge wurde so bemessen, daß die resultierende Filmdicke etwa 1 mm betrug. Die Zugversuche wurden nach den Norm ISO 37 gemacht. Die angegebenen Meßwerte sind Mittelwerte aus 6 Messungen an 6 Prüfkörpern. Dazu wurden nach der Ablösung des Films aus der Siliconform aus selbigem die zur Durchführung des Zugversuchs benötigten Probekörper (Probenlänge: 25 mm) ausgestanzt.

Die Probekörper wurden in die Klammern einer Zugprüfmaschine eingespannt und mit einer Abzugsgeschwindigkeit von 100 mm/min gerissen (Vorkraft: 0,05 N und Einspannlänge: 25 mm). Die Reißdehnung ist die Dehnung im Augenblick des Reißens. Sie bezieht sich auf 23°c und 1 atm. Ihre Angabe erfolgt als (L-Lo)/Lo) x 100 (%) dabei bedeuten:
Lo = die ursprüngliche Meßlänge
L = die Meßlänge beim Reißen

Die ermittelten mechanischen Eigenschaften des zugehörigen Polymerisatfilms waren:

**Tabelle 1**

| Nr. | DAAM/ADDH (pphm) | Spannung (Mpa) Mittelwert | Dehnung (%) Mittelwert |
|---|---|---|---|
| 1 | 1/0,5 | 1,62 ± 0,26 | 477,6 ± 43 |
| 2 | 1/0,5 | 0,96 ± 0,10 | 410,3 ± 28,8 |
| 3 | 1,5/0,75 | 1,1 ± 0,11 | 379,4 ±19,9 |
| 4 | 2/1 | 1,39 ±0,16 | 338,3 ± 27,1 |
| Dispersion 1 zeigt die höchste Spannung und Dehnung Werte. | | | |

Dispersion 1 zeigt die höchste Spannung und Dehnung Werte.

### C) Glanzfolienkaschierung

| | |
|---|---|
| Substrate | Chromoduplex 2-Karton, bedruckt Chromolux 700-Karton, bedruckt Polypropylenfolie, einseitig elektrisch vorbehandelt (PP) |

Der zu prüfende Kleber wird mittels eines Balkenrakels direkt auf die PP-Folie beschichtet (Kleberauftragsmenge 8 - 10 g trokken/m²). Der Kleber wird mit einem Kaltluftgebläse getrocknet und dann der bedruckte Karton in der Rollenkaschierstation bei 70°C, aufgepreßt.

Prägung - ist die mechnische Verformung der Oberfläche der kaschierten Substrate mittels einer Rasterwalze auf der Folienseite.

Die Kaschierung wird vor der Prägung mindestens 24 Stunden bei Raumtemperatur gelagert. Zur Prüfung werden die Kaschierungen in einem Walzenstuhl mit Prägewalze auf der Folienseite geprägt. Die Prägungen werden nach vorgewählten Lagerzeiten auf Ablösung der Kaschierfolie vom Karton geprüft und beurteilt (sieh Noten bei Tabelle 4).

Nutung - ist die mechanische Verformung (Rillen) von Glanzfolienkaschierungen.

Die Kaschierung wird vor der Nutung mindestens 24 Stunden bei Raumtemperatur gelagert. Zur Prüfung werden die Kaschierungen in einer Hebelpresse genutet. Die Nuten werden nach vorgewählten Lagerzeiten auf Ablösung der Kaschierfolie vom Karton geprüft und beurteilt (siehe Noten bei Tabelle 3).

Die Haftung wird durch abziehen der Folie vom Karton im Winkel von ca. 180 Grad geprüft und beurteilt (siehe Noten bei Tabelle 2).

**Tabelle 2**

| Beurteilung der Haftung | | | | |
|---|---|---|---|---|
| Dispersion | 1 | 2 | 3 | 4 |
| Chromolux 700 | | | | |
| Haftung nach | | | | |
| Sofort | 1-2 | 1-2 | 1-2 | 1-2 |
| 24 h | 1 | 1 | 1 | 1 |
| 1 Woche | 1 | 1 | 1 | 1 |
| 6 Wochen | 1 | 1 | 1 | 1 |

| Chromoduplex | | | | |
|---|---|---|---|---|
| Haftung nach | | | | |
| Sofort | 3-4 | 3-4 | 4 | 4 |
| 24 h | 1-2 | 1-2 | 1-2 | 1-2 |
| 1 Woche | 1-2 | 1-2 | 1-2 | 1-2 |
| 6 Wochen | 1-2 | 1-2 | 1-2 | 1-2 |
| Benotung: 1 = Vollflächiger Papier- oder Faserausriß 2 = Teilweiser papier- oder Faserausriß 3 = Gute Haftung mit Adhäsionsbruch Karton oder Folie 4 = Schwache Haftung 5 = keine Haftung auf Karton oder Folie | | | | |

**Tabelle 3**

| Beurteilung der Nutung | | | | |
|---|---|---|---|---|
| Dispersion | 1 | 2 | 3 | 4 |
| Chromolux 700 | | | | |
| Nutung nach | | | | |
| 24 h | 1-2 | 1 | 1- | 2 |
| 1 Woche | 1-2 | 1 | 1- | 2 |
| 6 Wochen | 1-2 | 1 | 1- | 2-3 |

| Chromoduplex | | | | |
|---|---|---|---|---|
| Nutung nach | | | | |
| 24 h | 1-2 | 1 | 1-2 | 3 |
| 1 Woche | 2 | 2-3 | 2 | 3-4 |
| 6 Wochen | 2 | 3 | 3 | 4 |
| Benotung: 1 Nut ist vollständig in Ordnung 2 Nut ist an einzelnen Stellen leicht geöffnet 3 Nut ist an einzelnen Stellen deutlich geöffnet 4 Nut ist vollständig offen | | | | |

**Tabelle 4**

| Beurteilung der Prägung | | | | |
|---|---|---|---|---|
| Dispersion | 1 | 2 | 3 | 4 |
| Chromolux 700 | | | | |
| Prägung nach | | | | |
| 24 h | 1-2 | 2-3 | 2-3 | 3 |
| 1 Woche | 1-2 | 2-3 | 2-3 | 3 |
| 6 Wochen | 2 | 3 | 3 | 3-4 |

| Chromoduplex | | | | |
|---|---|---|---|---|
| Prägung nach | | | | |
| 24 h | 1-2 | 2-3 | 1-2 | 2 |
| 1 Woche | 1-2 | 2-3 | 1-2 | 2 |
| 6 Wochen | 2 | 2-3 | 2 | 2 |
| Benotung: 1 = Vertiefungen geöffnet 0 bis <10% 2 = Vertiefungen geöffnet: > =10 bis < = 40% 3 = Vertiefungen geöffnet: > = 40 bis < = 60% 4 = Vertiefungen geöffnet: > 60 bis < = 90% 5 = Vertiefungen geöffnet: > 90 bis 100% | | | | |

## Patentansprüche

1. Verwendung von Zusammensetzungen, enthaltend ein Copolymerisat, erhältlich durch mehrstufige radikalische Polymerisation, wobei zunächst eine wässrige Polymerdispersion hergestellt wird (kurz als 1. Stufe bezeichnet) und in mindestens einer weiteren Stufe Monomere in Gegenwart der erhaltenen Polymerdispersion polymerisiert werden (alle weiteren Stufen kurz als 2. Stufe bezeichnet) als Kaschierklebstoff.

2. Verwendung gemäß Anspruch 1, **dadurch gekennzeichnet, dass** sich die Glasübergangstemperatur der Monomerenmischung der 1. Stufe und die Glasübergangstemperatur des Monomerengemischs der 2. Stufe, für sich allein polymerisiert, um mindestens 10°C unterscheiden.

3. Verwendung gemäß Anspruch 1 oder 2, **dadurch gekennzeichnet, dass** die Glasübergangstemperatur des gesamten Copolymerisats -60 bis +30°C beträgt und die Glasübergangstemperatur des Monomerengemisches der 2. Stufe größer als +50°C ist.

4. Verwendung gemäß einem der Ansprüche 1 bis 3, **dadurch gekennzeichnet, dass** das Copolymerisat insgesamt zu mindestens 40 Gew.-% aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren besteht.

5. Verwendung gemäß einem der Ansprüche 1 bis 4, **dadurch gekennzeichnet, dass** das Copolymerisat 0,0001 bis 1 mol Keto- oder Aldehydgruppen auf 100g Copolymerisat enthält und die Zusammensetzung eine Verbindung enthält, die mit den Keto- oder Aldehydgruppen eine Vernetzung eingeht.

6. Verwendung gemäß einem der Ansprüche 1 bis 5, **dadurch gekennzeichnet, dass** das Copolymerisat zu mindestens 80 Gew.-% aus der Monomermischung der 1 Stufe besteht.

7. Verwendung gemäß einem der Ansprüche 1 bis 6, **dadurch gekennzeichnet, dass** mit der Polymerisation der Monomeren der weiteren Stufen erst begonnen wird, wenn die Monomeren der 1 Stufe zu mindestens 90 % polymerisiert sind.

8. Verwendung gemäß einem der Ansprüche 1 bis 7, **dadurch gekennzeichnet, dass** während der Polymerisation der weiteren Monomeren weniger als 0,05 Gew.-Teile Initiator, bezogen auf 100 Gew.-Teile der weiteren Monomeren, bevorzugt kein Initiator, zugeführt wird.

9. Verwendung der Zusammensetzung gemäß einem der Ansprüche 1 bis 8 als Klebstoff für die Glanzfolienkaschierung, das heißt zur Verklebung von Papier oder Karton mit transparenten Polymerfolien.

10. Substratverbunde, erhältlich durch Verwendung gemäß einem der Ansprüche 1 bis 9.

## Claims

1. The use of a composition comprising a copolymer obtainable by multistage free-radical polymerization, in which first an aqueous polymer dispersion is prepared (referred to for short as 1st stage) and in at least one further stage monomers are polymerized in the presence of the resulting polymer dispersion (all further stages referred to for short as 2nd stage) as laminating adhesive.

2. The use as claimed in claim 1, wherein the glass transition temperature of the monomer mixture of the 1st stage and the glass transition temperature of the monomer mixture of the 2nd stage, polymerized alone, differ by at least 10°C.

3. The use as claimed in claim 1 or 2, wherein the glass transition temperature of the whole copolymer is from -60 to +30°C and the glass transition temperature of the monomer mixture of the 2nd stage is greater than +50°C.

4. The use as claimed in any of claims 1 to 3, wherein the copolymer overall is composed of at least 40% by weight of principal monomers selected from C₁ to C₂₀ alkyl (meth)acrylates, vinyl esters of carboxylic acids containing up to 20 carbon atoms, vinylaromatics having up to 20 carbon atoms, ethylenically unsaturated nitriles, vinyl halides, vinyl ethers of alcohols comprising from 1 to 10 carbon atoms, aliphatic hydrocarbons having from 2 to 8 carbon atoms and one or two double bonds, and mixtures of these monomers.

5. The use as claimed in any of claims 1 to 4, wherein the copolymer comprises from 0.0001 to 1 mol of keto or aldehyde groups per 100 g of copolymer and the composition comprises a compound which undergoes crosslinking with the keto or aldehyde groups.

6. The use as claimed in any of claims 1 to 5, wherein the copolymer is composed of at least 80% by weight of the monomer mixture of the 1st stage.

7. The use as claimed in any of claims 1 to 6, wherein the polymerization of the monomers of the further stages is not begun until the monomers of the 1st stage have undergone at least 90% polymerization.

8. The use as claimed in any of claims 1 to 7, wherein during the polymerization of the further monomers less than 0.05 part by weight of initiator per 100 parts by weight of the further monomers, preferably no initiators, is supplied.

9. The use of the composition as set forth in any of claims 1 to 8 as an adhesive for high gloss film lamination, i.e., for the adhesive bonding of paper or card to transparent polymer films.

10. A substrate assembly obtainable through the use as claimed in any of claims 1 to 9.

## Revendications

1. Utilisation de compositions contenant un copolymère que l'on peut obtenir par polymérisation radicalaire en plusieurs étapes, une dispersion aqueuse de polymère étant tout d'abord préparée (ce qui est désigné brièvement par étape 1) et des monomères étant, dans au moins une autre étape, polymérisés en présence de la dispersion de polymère obtenue (toutes les autres étapes étant désignées brièvement par étape 2), comme adhésif de contrecollage.

2. Utilisation suivant la revendication 1, **caractérisée en ce que** la température de transition vitreuse du mélange de monomères de l'étape 1 et la température de transition vitreuse du mélange de monomères de l'étape 2, à l'état polymérisé isolément, diffèrent d'au moins 10°C.

3. Utilisation suivant la revendication 1 ou 2, **caractérisée en ce que** la température de transition vitreuse du copolymère global est de -60 à +30°C et **en ce que** la température de transition vitreuse du mélange de monomères de l'étape 2 est supérieure à +50°C.

4. Utilisation suivant les revendications 1 à 3, **caractérisée en ce que** le copolymère est, au total pour au moins 40% en poids, constitué de ce que l'on appelle des monomères principaux, choisis parmi des (méth)acrylates d'alkyle en C₁-C₂₀, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle, des éthers vinyliques d'alcools contenant 1 à 10 atomes de C, des hydrocarbures aliphatiques comportant 2 à 8 atomes de C et une ou deux doubles liaisons ou des mélanges de ces monomères.

5. Utilisation suivant l'une des revendications 1 à 4, **caractérisée en ce que** le copolymère contient 0,0001 à 1 mole de groupes céto ou aldéhyde pour 100 g de copolymère et **en ce que** la composition contient un composé qui donne lieu à une réticulation avec les groupes céto ou aldéhyde.

6. Utilisation suivant l'une des revendications 1 à 5, **caractérisée en ce que** le copolymère est constitué pour au moins 80% en poids du mélange de monomères de l'étape 1.

7. Utilisation suivant l'une des revendications 1 à 6, **caractérisée en ce que** l'on commence avec la polymérisation des monomères des autres étapes uniquement lorsque les monomères de l'étape 1 sont polymérisés pour au moins 90%.

8. Utilisation suivant l'une des revendications 1 à 7, **caractérisée en ce que**, pendant la polymérisation des autres monomères, on amène moins de 0,05 partie en poids d'amorceur, par rapport à 100 parties en poids des autres monomères, de préférence pas d'amorceur.

9. Utilisation de la composition suivant l'une des revendications 1 à 8, comme adhésif pour le contrecollage de feuilles brillantes, c'est-à-dire pour le collage sur du papier ou du carton de feuilles de polymère transparentes.

10. Substrats composites, que l'on peut obtenir par l'utilisation suivant l'une des revendications 1 à 9.
